# EUROPÄISCHE PATENTSCHRIFT

(11) **EP 1 394 203 B1**
(45) Veröffentlichungstag und Bekanntmachung des Hinweises auf die Patenterteilung: **18.01.2006**
(21) Anmeldenummer: 03019545.7
(22) Anmeldetag: 01.09.2003
(51) Int. Cl.: C08L 23/08, C08L 33/08

(54) **Folie oder Formkörper auf Basis einer transparenten Polymermischung**
Sheet or article based on a transparent polymer mixture
Feuille ou objet à base d'un mélange de polymères transparents

(30) Priorität: 02.09.2002 DE 10240970
(43) Veröffentlichungstag der Anmeldung: 03.03.2004
(73) Patentinhaber: Benecke-Kaliko Aktiengesellschaft, D-30419 Hannover (DE)
(72) Erfinder: Bühring, Jürgen, Dr., 73033 Göppingen (DE)
(74) Vertreter: Finger, Karsten

(56) Entgegenhaltungen:
- EP-A- 0 204 453
- DE-A- 19 653 590
- US-A- 5 180 783

## Beschreibung

Die Erfindung betrifft eine Folie und einen Formkörper auf der Basis einer transparenten und Hochfrequenz-verschweißbaren Polymermischung.

Folien der vorstehend bezeichneten Art sind bekannt. Sie beruhen im Allgemeinen auf der Basis von Polyvinylchlorid. Polyvinylchlorid hat den Vorteil der guten HF-Verschweißbarkeit und auch der in Einzelfällen zu fordernden Transparenz. PVC-Produkte sind für technische Applikationen seit vielen Jahren und in vielfältigsten Produkten im Einsatz. Aufgrund des Trends, den Einsatz von chlorhaltigen und weichmacherhaltigen Materialien in allen Lebensbereichen zu reduzieren, besteht im Bauwesen, Automobilsektor und im Kabelbereich der dringende Bedarf an halogenfreien Alternativprodukten.

Ein Problem bei der Suche nach halogenfreien Alternativprodukten besteht häufig darin, dass PVC-Folien sehr gut Hochfrequenz-verschweißbar sind, wohingegen mögliche PVC-Ersatzmaterialien, wie beispielsweise Polyurethanfolien oder auf dem Markt bekannte thermoplastische Polyolefinfolien, nicht oder nur unzulänglich verschweißbar sind.

Eine weitere Eigenschaft, die insbesondere im Automobilsektor eine Rolle spielt, ist eine ausreichende Kälteflexibilität des Materials. Eine hohe Kälteflexibilität ist insbesondere dann wichtig, wenn die Materialien bei niedrigen Temperaturen einer dynamischen Belastung unterliegen. So dienen beispielsweise polyolefinische Folienmaterialien als Dekor für verdeckte Airbagsysteme. Damit sich ein Material für eine solche Applikation eignet, muß sichergestellt sein, dass es bei den Prüftemperaturen (üblicherweise -30°C) nicht versprödet oder hohe Reißfestigkeiten aufweist, womit die Durchdringung des Dekors durch die Airbagklappe beeinträchtigt wird. Auch muß gewährleistet sein, dass das Material aufgrund seiner Sprödigkeit nicht splittert. Diese Splitter könnten zu Verletzungen der Fahrgäste führen. Demzufolge muß eine Sprödigkeit des Folienmaterials vermieden und eine gewünschte Öffnung des Airbags bei tiefen Temperaturen (Partikelflug frei) gewährleistet sein.

Auch ist eine hohe Kälteflexibilität beispielsweise bei Laderaumabdeckungen von Bedeutung, die in Form von Lamellen oder Rollos verwirklicht werden können, bei denen auch in Kälte ein einwandfreies Auf- bzw. Abrollen sichergestellt sein muß. Gleichzeitig muß für die Applikationen im Automobil- oder Fahrzeugbereich eine Wärmestabilität von mindestens 100°C gegeben sein. Wärmestabilität bedeutete in diesem Fall, dass die eingebrachte Oberflächenstruktur oder Narbe auch nach 21tägiger Lagerung bei dieser Prüftemperatur nach wie vor erhalten bleibt und weiterhin auch keine Glanzzunahme erkennbar ist.

Die angesprochenen PVC-Produkte erfüllen einen Großteil der vorstehend angesprochenen Anforderungen. So sind sie insbesondere auch transparent, was in Einzelfällen gefordert wird. Allerdings zeigen sie den Nachteil, dass sie Weichmacher mit den für diese bekannten Nachteilen enthalten. Hier seien insbesondere genannt die unzureichende Alterungsbeständigkeit sowie die durch den Weichmacher verursachten Emissionen. Sowohl im Automobil- als auch im Schuhbereich gibt es starke Tendenzen, die weit verbreiteten PVC-Materialien durch halogenfreie Substanzen zu ersetzen. Allerdings können viele Eigenschaften des Polyvinylchlorids nur mit sehr hohem innovativen Aufwand mit anderen Materialklassen dargestellt werden.

Es gibt zwar gewisse Lösungsvorschläge, die jedoch sämtlich nicht voll befriedigen. Es sei hier verwiesen auf die EP 0 703 271 A1. Diese beschreibt eine bei Raumtemperatur flexible, halogenfreie thermoplastische Polyolefinzusammensetzung. Dabei werden u.a. Ethylen-vinylacetat-Copolymere sowie Polyethylene sehr niedriger Dichte verwendet. Obwohl diese Formulierungen oftmals nützlich für manche Applikationen sind, haben sie den Nachteil, dass sie keine ausreichende Wärmebeständigkeit aufweisen, sobald sie Temperaturen von mehr als 80°C ausgesetzt sind.

Der Stand der Technik nach der DE 100 18 196 A1 beschreibt ein Verfahren zur Herstellung einer genarbten Folie aus einer Masse mit einem Gehalt an unvernetzten Poly- olefinen und gegebenenfalls weiteren Additiven, wobei die in üblicher Weise erhaltene Folie durch Erzielen einer zum Tiefziehen geeigneten Narbfestigkeit mit Elektronenstrahlen behandelt wird, und die genarbte Folie einer Dichte von etwa 0,7 bis 1,2 g/cm³ tiefgezogen wird. Als unvernetzte Polyolefine werden Polypropylen, Polyethylen, Polypropylen-Copolymere oder -Terpolymere mit C₂, C₄ bis C₁₂-α-Olefinen und/oder Polyethylen-Copolymere oder -Terpolymere mit C₃ bis C₁₂-α-Olefinen eingesetzt. Die erhaltenen Folie zeichnen sich insbesondere durch eine gute Narbstabilität aus und ist prägbar und laminierbar. Diese ist jedoch nicht HF-schweißfähig.

Die DE 196 53 590 C2 betrifft ebenfalls eine PVC-freie und damit auch halogenfreie Hochfrequenz-verschweißbare Polymermischung. Sie enthält zwingend ein polyamidhaltiges thermoplastisches Polyolefin neben weiteren Copolymeren, beispielsweise Ethylen, ist aber durch das polyamidhaltige thermoplastische Polyolefin nicht transparent. Nach der nachveröffentlichten DE 101 53 408 wird ebenfalls eine hochfrequenzverschweißbare Polymermischung beschrieben, die etwa 1 bis 30 Gew.-% eines Ethylen-Copolymers mit einem Gehalt an polaren Comonomeren unter etwa 25 Gew.-%, ausgewählt aus der Gruppe der Vinylester gesättigter C₂-C₈-Carbonsäuren und der C₁-C₁₂-Alkylacrylate und/oder -methacrylate, etwa 1 bis 40 Gew.-% eines Terpolymers oder eines weiteren Copolymers mit einem Comonomerengehalt über etwa 25 Gew.-%, sowie etwa 35 bis 75 Gew.-% eines thermoplastischen Polyolefins mit einem Schmelzpunkt über etwa 115°C enthält. Diese Polymermischung ist jedoch aufgrund der letztgenannten Komponente nicht transparent.

Es ist demzufolge Aufgabe der vorliegenden Erfindung, Folien bzw. Formkörper vorzuschlagen, die nicht auf PVC beruhen und demzufolge halogenfrei sind, jedoch die vorteilhaften Eigenschaften von PVC-Folien weiterhin zeigen, nämlich die Transparenz, die HF-Verschweißbarkeit sowie die Wärmebeständigkeit, eine wünschenswert gute Kälteflexibilität und Alterungsbeständigkeit und darüber hinaus auch die nachteiligen Emissionen, die mit dem Einsatz von PVC-Folien verbunden sind, minimieren bzw. ausschließen.

Erfindungsgemäß wird diese Aufgabe gelöst durch eine Folie oder einen Formkörper auf der Basis einer transparenten und Hochfrequenz-verschweißbaren Polymermischung, enthaltend
a) (**I**) ein Copolymer von Ethylen mit etwa 8 bis 60 Gew.-% Comonomeren, ausgewählt aus Vinylestern gesättigter C₂-C₈-Carbonsäuren, C₁-C₁₂-Alkylacrylaten und -methacrylaten, wahlweise mit Kohlenmonoxid als Termonomer, oder (**II**) ein Gemisch von zwei oder mehreren der vorstehend bezeichneten Verbindungen, unabhängig von der Gruppenzuordnung, wobei die Polymeren bzw. deren Gemisch einen Schmelzindex MFI (190°C; 2,16 kg) von etwa 0,2 bis 15,0 g/10 min aufweisen und
**b**) ein Copolymer von Ethylen mit etwa 10 bis 30 Gew.-% C₃-C₁₂-α-Olefin mit einem Schmelzindex MFI (190°C, 2,16 kg) von etwa 0,2 bis 15,0 g/10 min, wobei das Material der Folie bzw. des Formkörpers in seiner Gesamtheit teilvernetzt ist.

Erfindungsgemäß wird demzufolge eine Folie oder ein Formkörper auf Basis einer transparenten und Hochfrequenz-verschweißbaren Polymermischung als maßgeschneiderte Zusammensetzung für die gewünschte Anwendung bereitgestellt, welche die erforderlichen Eigenschaftsprofile aufweist. So sind polare Polymere vorhanden, welche die Hochfrequenzverschweißbarkeit ermöglichen und eine erhöhte Kälteflexibilität zur Verfügung stellen. Zusätzlich liegt eine erhöhte Temperaturstabilität vor, ohne jedoch die Verschweißbarkeit und ausgezeichnete Kälteflexibilität zu beeinträchtigen. Zudem liegt ein transparentes Produkt vor.

Die Komponenten der erfindungsgemäß bereitgestellten Polymermischung werden nachfolgend im einzelnen erläutert:

Die erfindungsgemäße Komponente a) umfasst zwei alternative Möglichkeiten. Nach der Variante (**I**) ist ein Copolymer von Ethylen mit einem polaren Comonomer enthalten. Als polare Comonomeren können Vinylester gesättigter C₂-C₈-Carbonsäuren, C₁-C₁₂-Alkylacrylate und -methacrylate, wahlweise mit Kohlenmonoxid als Termonomer, Verwendung finden. Bevorzugte Beispiele sind Ethylen-Vinylacetat-Copolymer, Ethylen-Methylacrylat-Copolymer, Ethylen-Ethylacrylat-Copolymer und/oder Ethylen-Butylacrylat-Copolymer. Der Comonomerengehalt wird im Bereich von etwa 8 bis 60 Gew.-%, bevorzugt von etwa 14 bis 45 Gew.-%, insbesondere von etwa 14 bis 28 Gew.-% eingestellt. Besonders bevorzugte Beispiele stellen Ethylen-Vinylacetat-Copolymer sowie Ethylen-Methylacrylat-Copolymer dar.

Insbesondere bevorzugt kommt auch ein Gemisch der unter die Gruppe **a**) **(I)** fallenden Verbindungen zum Einsatz, insbesondere in Form eines Gemisches unterschiedlicher Ethylen-Vinylacetat-Polymertypen.

Außerdem können Terpolymere eingesetzt werden, die aus Ethylen, einem oder mehreren der bei der Variante **(I)** angegebenen Comonomeren und Kohlenmonoxid aufgebaut sind, wobei sich die einzelnen Monomereinheiten statistisch über die Polymerkette verteilen. Die Gegenwart von Kohlenmonoxid kann für die HF-Verschweißbarkeit Vorteile bieten. Ein bevorzugtes Beispiel ist Vinylacetat-Kohlenmonoxid-Terpolymer.

Als Variante (II) der Komponente **a)** kann auch ein Gemisch von zwei oder mehreren der vorstehend bezeichneten Verbindungen entsprechend der Variante **(I)** und/oder **(II)**, unabhängig von der Gruppenzuordnung, eingesetzt werden.

Das oder die Polymere oder Polymergemische der Komponente a) weisen in jeder der oben angesprochenen drei Alternativen einen Schmelzindex MFI (190°C; 2,16 kg) im Bereich von etwa 0,2 bis 15 g/10 min, insbesondere zwischen etwa 0,3 bis 4,0 g/10 min auf.

Die weitere Komponente **b)** der erfindungsgemäßen Polymermischung enthält ein Copolymer von Ethylen mit etwa 10 bis 30 Gew.-% C₃-C₁₂-α-Olefin. Als α-Olefine werden zum Beispiel Ethen, 1-Buten, 1-Propen, 1-Penten, 1-Hexen, 1-Octen und/oder 4-Methyl-penten-1 eingesetzt, wobei insbesondere 1-Propen, 1-Buten, 1-Hexen und 1-Octen bevorzugt sind. Die Komponente **b)** weist einen Schmelzindex MFI (190°C, 2,16 kg) von etwa 0,2 bis 15,0 g/10 min, insbesondere zwischen etwa 0,2 und 4,0 g/10 min auf.

Die Einhaltung der angegebenen MFI-Werte der Komponenten **a)** und **b)** ist hierbei kritisch, weil beim Herstellungsprozeß die erweichten Massen eine ausreichende Festigkeit aufweisen müssen, um maschinengängig zu sein. Andererseits muß die Polymermischung beim Verschweißvorgang eine hinreichende Fließfähgkeit besitzen.

Nach einer weiteren erfindungsgemäßen Ausführungsform kann die Komponente b) zusätzlich ein Termonomer aus der Gruppe der nicht-konjugierten Diene enthalten. Geeignete nichtkonjugierte Diene sind lineare aliphatische Diene, zum Beispiel 1,4-Hexadien, Alkylidenbicycloalkene, wie 5-Ethyliden-2-norbornen, Alkenylbicycloalkene, wie 5-Alkenyl-2-norbornen, Bicycloalkadiene, wie Bicyclopentadien und Alkenylcycloalkene, wie Vinylcyclohexen oder auch direaktive nichtkonjugierte Diene, wie 2,5-Norbornadien oder 1,6-Octadien. Insbesondere bevorzugt sind 5-Ethyliden-2-norbornen und/oder 1,4-Hexadien.

Zweckmäßigerweise liegt das Gewichtsverhältnis der Komponente **a)** zu Komponente **b)** zwischen etwa 99:1 und 40:60, insbesondere zwischen etwa 95:5 bis 60:40. Bevorzugt beträgt die Menge an den Komponenten **a)** und **b)** in dem Material der Folie bzw. des Formkörpers mindestens etwa 80 Gew.-%, insbesondere mindestens etwa 90 Gew.-%.

Erfindungsgemäß liegt das Material der Folie bzw. des Formkörpers teilvernetzt vor. Besonders bevorzugt wird der Gelgehalt der Polymermischung auf etwa 1 bis 60%, bevorzugt zwischen etwa 5 und 45%, besonders bevorzugt zwischen etwa 10 und 40%, insbesondere zwischen etwa 10 und 30% eingestellt. Dies hat den Vorteil, dass eine definierte Phasen-Morphologie der amorphen Phase vorliegt, und dass erhöhte Anteile weicher Polymerkomponenten, die die Kälteflexibilität verbessern, aufgrund der Vernetzung zu keiner Verschlechterung der Temperaturstabilität führen. Die Vernetzung kann bereits in der Polymermischung vorliegen, oder vor oder nach dem Formgebungsverfahren durchgeführt werden.

Vorzugsweise wird zur Optimierung der Kälteflexibilität ein zusätzliches Polymer mit einer Glasübergangstemperatur von ≤ -30°C einverleibt. Hierbei kann es sich um ein teilvernetztes thermoplastisches Elastomer, insbesondere in Form eines teilvernetzten thermoplastischen Olefins (TPO) mit einem Schmelzindex MFI (230°C; 10 kg) von etwa 5 bis 30g/10 min handeln. Dies stellt beispielsweise ein kautschukartiges Polymer, insbesondere ein Poly(dien), welches auch teilhydriert sein kann, dar. Weitere Komponenten zur Optimierung der Kälteflexibilität sind dem Fachmann bekannt, wobei diese erfindungsgemäß in einer Menge bis zu etwa 20 Gew.%, bezogen auf 100 Gew.% der Komponenten **a)** plus **b)**, vorliegen.

Die erfindungsgemäße Polymermischung kann außerdem übliche Additive enthalten, die die geforderte Transparenz der Folie und des Formkörpers nicht beeinträchtigen und zudem die Hochfrequenzverschweißbarkeit nicht wesentlich beeinflussen. Mögliche Additive umfassen Antiblockmittel, Gleitmittel, Lichtschutzmittel, Antioxidantien, Farbstoffe, Pigmente, Flammschutzmittel und/oder Antistatika. Die Additive werden üblicherweise in Gehalten bis zu 10 Gew.-%, bezogen auf die Menge an polymeren Komponenten, zugegeben. Bei der Einverleibung von Pigmenten ist es ferner von Vorteil, wenn deren Konzentration nicht über 3 Gew.-%, insbesondere nicht über 0,5 Gew.-% liegt.

Die erfindungsgemäße Folie oder der Formkörper, enthaltend die vorstehend geschilderte Polymermischung, sind nach den üblichen Verfahren herstellbar. Die Herstellung der erfindungsgemäßen Folie bzw. des Formkörpers liegt im rein handwerklichem Rahmen. So kann dies beispielsweise durch Extrusion oder Kalandrieren zu flächigen Gebilden bzw. Folie erfolgen, während die Herstellung von Formkörpern über beispielsweise Spritzguß oder Blasformprozesse durchgeführt werden kann. Diese Produkte können dann den üblichen Weiterbehandlungen unterzogen werden, beispielsweise auch zur Verbesserung der Oberflächenbeständigkeit mit einer Schutzschicht versehen werden. Bevorzugt wird die Oberfläche der Folie oder des Formkörpers zur Verbesserung der Bedruckbarkeit einer Coronabehandlung, Plasmabehandlung oder einer Beflammung unterzogen. Anschließend besteht optional die Möglichkeit, die Folie oder den Formkörper beispielsweise mit einer Oberflächenstruktur zu versehen.

Eine aus der erfindungsgemäßen Polymermischung hergestellte Folie kann beispielsweise wie folgt hergestellt werden: Vorzugsweise werden die granulierten Rohstoffe kalt gemischt und einem Extruder, beispielsweise einem Zweischneckenextruder, zugeführt und dort plastifiziert. Das Material wird dann über eine Breitschlitzdüse zu einer Bahnenware (Folie) ausgetragen und von Nachfolgeeinrichtungen aufgenommen. Formkörper sind beispielsweise durch Tiefziehen oder Verpressen aus der Folie erhältlich. Vorzugsweise erfolgt die Vernetzung nach Herstellung der Folie bzw. des Formkörpers. Die erhaltene Folie oder der Formkörper sind vorteilhafterweise halogenfrei.

Nach einer besonders bevorzugten Ausführungsform der Erfindung ist die Folie/der Formkörper mehrlagig ausgebildet, insbesondere kann eine Zwischenschicht in Form einer Trägerschicht vorliegen. Vorzugsweise ist die Zwischenschicht unterbrochen, beispielsweise perforiert, um den Verbund des Gesamtgebildes zu verbessern. Es kann von Vorteil sein, wenn die Zwischenschicht in Form eines Gewebes vorliegt, um die Vernähbarkeit zu ermöglichen.

Wie bereits angesprochen, besteht die Möglichkeit, die Folie oder den Formkörper auch nach der Formgebung zu vernetzen. Dies kann insbesondere unter Einwirkung von Elektronen oder γ-Strahlen erfolgen. Die Bestrahlung kann dabei sowohl einseitig als auch beidseitig durchgeführt werden. Die mechanischen Eigenschaften der erfindungsgemäßeb Folie können durch die Vernetzung innerhalb bestimmter Grenzen, zum Beispiel durch die eingestellte Strahlendosis, gesteuert werden. Vorteilhaft wird dabei die Behandlung mit Elektronenstrahlen mit einer Strahlendosis von etwa 10 bis 500, insbesondere etwa 30 bis 300 kJ/m² durchgeführt. Auch der Gelgehalt, der für die mechanischen Eigenschaften von großer Bedeutung ist, wird hierdurch beeinflusst. Im Rahmen der vorliegenden Erfindung wurden die Gelgehalte nach der Extraktions-Methode bestimmt, indem nach 24 Stunden Extraktion des Materials in siedendem Xylol und 10 minütiger Lagerung in Aceton bei Raumtemperatur anschließender 24-stündiger Trocknung bei 60°C die Menge des nicht aufgelösten Materials bestimmt und in Relation zur eingesetzten Menge gesetzt wird. Zweckmäßigerweise liegt, wie bereits erläutert, nach dem Vernetzen der gesamte Gelgehalt zwischen etwa 1 und 60%.

Ein weiteres wichtiges Kriterium für die erfindungsgemäße Folie bzw. Formkörper ist das sogenannte Fogginverhalten, d.h. die Eintrübung beispielsweise einer Windschutzscheibe. Dies erfolgt erfindungsgemäß nach der DIN 75201B anhand der Bestimmung des Kondensats, das vorteilhafterweise < 1,0 mg, vorzugsweise < 0,5 mg beträgt.

Die Folie, insbesondere Weichfolie, oder der Formkörper findet vorzugsweise im Automobilbereich Verwendung als Airbagverkleidung, Himmel, Kopfstütze, Halteschlaufe, Hutablage, Sitz- und Rückpolsterbezug sowie rückseitige Verkleidung der Vordersitze, Sonnenblende, Trittschutz, Türseitenverkleidung, Laderaumabdeckung, Cabrioverdeck, Faltdach, Pendeltürfolie oder Designelemente im Möbel- oder Schuhbereich. Daneben sind Anwendungen bei Kofferauskleidungen, Bucheinbänden etc. möglich. In einer vorteilhaften Ausführung als Faltdach kann die Folie zweckmäßigerweise aus einer Ober- und einer Unterfolie, einem dazwischenliegenden Träger sowie gegebenenfalls weiteren Folien und Schichten aufgebaut sein, wobei die Ober- und Unterfolie die Polymermischung der Erfindung enthält.

Die mit der Erfindung verbundenen Vorteile sind vielschichtig. So werden erfindungsgemäß Folien bzw. Formkörper bereitgestellt, die nicht auf PVC beruhen und demzufolge halogenfrei und weichmacherfrei sind, aber die vorteilhaften Eigenschaften von PVC-Folien weiterhin zeigen, nämlich Transparenz, HF-Verschweißbarkeit, Wärmebeständigkeit, Kälteflexibilität und zudem eine gute UV- und Alterungsbeständigkeit. Die nachteiligen Emissionen, die mit dem Einsatz von weichmacherhaltigen PVC-Folien verbunden sind, können vermieden werden.

Somit besitzt die erfindungsgemäße Folie oder der Formkörper gegenüber den eingangs geschilderten Lehren des Standes der Technik eine überraschende Kombination von Eigenschaften. Die Zusammensetzungen weisen eine ausgezeichnete Kälteflexibilität auf. Daher können Folien oder Formkörper bereitgestellt werden, die auch bei niedrigen Temperaturen hohen dynamischen Belastungen ausgesetzt werden können, ohne zu zersplittern. Gleichzeitig wird eine ausreichend hohe Temperaturstabilität zur Verfügung gestellt. Eine weitere wesentliche Eigenschaft der erfindungsgemäß bereitgestellten Polymermischung stellt deren Hochfrequenz-Verschweißbarkeit dar, wodurch sich Anwendungen erschließen, die mit den Systemen aus dem Stand der Technik bislang nicht möglich waren. Darüber hinaus sind die Folien/Formkörper der Erfindung transparent, was für viele Anwendungen erwünscht ist. Gleichzeitig liegt die für die Applikationen im Automobil- oder Fahrzeugbereich erforderliche Wärmestabilität vor, wobei weiterhin auch keine Glanzzunahme eintritt.

Die Folie oder der Formkörper der Erfindnung ermöglicht demnach die gezielte Steuerung der Eigenschaftsprofile und liefert eine für die entsprechende Verwendung maßgeschneiderte Zusammensetzung.

Nachfolgend wird die Erfindung anhand von Beispielen, welche die erfindungsgemäße Lehre nicht beschränken sollen, im einzelnen beschrieben. Dem Fachmann sind im Rahmen der erfindungsgemäßen Offenbarung weitere Ausführungsbeispiele offensichtlich.

### Beispiele

In den Beispielen werden folgende Einsatzstoffe verwendet:
- EVA 1 Ethylen-Vinylacetat-Copolymer,
MFI = 1 g/10 min (190°C, 2,16 kg)
Vinylacetatgehalt: 17 Gew.-%
- EVA 2 Ethylen-Vinylacetat-Copolymer,
MFI = 2 g/10 min (190°C, 2,16 kg)
Vinylacetatgehalt: 25 Gew.-%
- EVACO Ethylen-Vinylacetat-Kohlenmonoxid-Terpolymer,
MFI = 15 g/10 min (190°C, 2,16 kg),
Vinylacetatgehalt: 20 Gew.-%, Kohlenmonoxidgehalt 8 Gew.-%
- PE 1 LLDPE mit einer Dichte von 0,93 g/l und einem MFI von
1 g/10 min (190°C, 2,16 kg), Schmelzpunkt 128°C
- PE 2 VLDPE mit einer Dichte von 0,87 g/l und einem MFI von
0,5 g/10 min (190°C, 2,16 kg), Schmelzpunkt 70°C

| | Beispiel 1 (Vergleichsbeispiel) | Beispiel 2 (Vergleichsbeispiel) | Beispiel 3 (Erfindung) |
|---|---|---|---|
| EVA 1 | | 20 | 65 |
| EVA 2 | 65 | | |
| EVACO | | 35 | |
| PE 1 | 35 | | |
| PE 2 | | 45 | 35 |
| | | | |
| Extrusionsverhalten | i.O. | i.O. | i.O. |
| Gelgehalt [%] | 15 | 0 | 15 |
| 5% Modul -30°C | 22 | 4 | 17 |
| HF-Verschweißbarkeit | i.O. | i.O. | i.O. |
| Schälkraft [N] | 42 | 50 | 35 |
| transparent (visuell) | NEIN | JA | JA |
| Lichtechtheit DIN 75202 5 Zyklen | Stufe 4-5 | Stufe 1, Narbverlust | Stufe 4-5 |
| Oberflächenänderung Nach Wärmealterung 24 h, 100°C | keine | Glanzzunahme, Narbverflachung | keine |
| Kondensat (16h, 100°C) gemäß DIN 75201 B | 0,3 | 0,3 | 0,3 |

| | | | |
|---|---|---|---|
| i.O.........in Ordnung | | | |

### Beispiel 1 (Vergleichsbeispiel):

In einem Trommelmischer werden 65 Gew.-% EVA 1 und 35 Gew.-% PE 1 gemischt und anschließend in einem Zweiwellenextruder bei 190°C zu einer 0,5 mm starken Folie extrudiert. Die Folien werden anschließend durch Verpressen mit einer genarbten Platte mit einer Oberflächenstruktur versehen. Das Verpressen erfolgte bei einem Druck von 15 bar, 190°C für 5 Minuten. Anschließend wurde die Folie vernetzt.

Für die HF-Verschweißversuche wurden zwei Folien auf einer Hochfrequenzschweißanlage mit einem Generator G4000 SD und der Presse KH500 jeweils von der Firma Kiefel bei Raumtemperatur verschweißt. Folgende Schweißparameter wurden gewählt:

| | |
|---|---|
| Schweißdruck: | 1600 N |
| Schweißzeit: | 4 s |
| Schweißspannung: | 2100 V |
| Elektrode: | 150 x 5 mm |

Die physikalischen und mechanischen Eigenschaften der Folien und der Schweißnähte sind in Tabelle 1 zusammengefasst.

Man erkennt, dass durch die Zugabe des PE 1 der E-Modul bei -30°C bei > 20 MPa liegt, und somit die Anforderungen nicht erfüllt. Desweiteren ist das erhaltene Material nicht ausreichend transparent. Die Eigenschaften hinsichtlich HF-Verschweißbarkeit, Lichtechtheit und Alterungsstabilität in der Wärme werden von dem Material jedoch voll erfüllt.

### Beispiel 2 (Vergleichsbeispiel):

Es wurden die in der Tabelle angegebenen Komponenten gemischt. Die Folienherstellung erfolgte analog dem Beispiel 1. Es wurde auf die Vernetzung verzichtet. Es wurde eine homogene Folie mit den in der Tabelle angegebenen Eigenschaften erhalten.

Das Beispiel zeigt eine transparente, HF-verschweißbare Folie, die allerdings aufgrund der nicht durchgeführten Vernetzung keine ausreichende Wärme- und Lichtstabilität aufweist.

### Beispiel 3 (Erfindung):

Es wurden die in der Tabelle angegebenen Komponenten gemischt. Die Folienherstellung erfolgte analog dem Beispiel 1. Es wurde eine homogene Folie mit den in der Tabelle angegebenen Eigenschaften erhalten.

Das Beispiel 3 zeigt gegenüber den Beispielen 1 und 2 eine Folienzusammensetzung, die die Materialeigenschaften Transparenz, hohe Kälteflexibilität, keine Wärmealterung, Halogenfreiheit und ausgezeichnete HF-Verschweißbarkeit aufweist.

## Patentansprüche

1. Folie oder Formkörper auf der Basis einer transparenten und Hochfrequenz-verschweißbaren Polymermischung, enthaltend
a) (I) ein Copolymer von Ethylen mit etwa 8 bis 60 Gew.-% Comonomeren, ausgewählt aus Vinylestern gesättigter C₂-C₈-Carbonsäuren, C₁-C₁₂-Alkylacrylaten und -methacrylaten, wahlweise mit Kohlenmonoxid als Termonomer, oder ein Gemisch von zwei oder mehreren der vorstehend bezeichneten Verbindungen, wobei die Polymeren bzw. deren Gemisch einen Schmelzindex MFI (190°C; 2,16 kg) von etwa 0,2 bis 15,0 g/10 min aufweisen und
b) ein Copolymer von Ethylen mit etwa -10 bis 30 Gew.-% C₃-C₁₂-α-Olefin mit einem Schmelzindex MFI (190°C, 2,16 kg) von etwa 0,2 bis 15,0 g/10 min,
wobei das Material der Folie bzw. des Formkörpers in seiner Gesamtheit teilvernetzt ist.

2. Folie oder Formkörper nach Anspruch 1, **dadurch gekennzeichnet, dass** die Teilvernetzung durch einen Gelgehalt der Polymermischung von etwa 1 bis 60% ausgedrückt ist.

3. Folie oder Formkörper nach Anspruch 2, **dadurch gekennzeichnet, dass** der Gelgehalt zwischen etwa 5 und 45%, bevorzugt zwischen etwa 10 und 40%, insbesondere zwischen etwa 10 und 30% liegt.

4. Folie oder Formkörper nach mindestens einem der vorhergehenden Ansprüche, **dadurch gekennzeichnet, dass** das Gewichtsverhältnis der Komponenten a) zu b) zwischen etwa 99:1 und 40:60 liegt.

5. Folie oder Formkörper nach Anspruch 4, **dadurch gekennzeichnet, dass** das Gewichtsverhältnis der Komponenten **a)** zur Komponenten **b)** zwischen etwa 95:5 bis 60:40 liegt.

6. Folie oder Formkörper nach mindestens einem der vorhergehenden Ansprüche, **dadurch gekennzeichnet, dass** zur Optimierung der Kälteflexibilität ein zusätzliches Polymer mit einer Glasübergangstemperatur von ≤ -30°C einverleibt ist.

7. Folie oder Formkörper nach Anspruch 6, **dadurch gekennzeichnet, dass** als Mittel zur Optimierung der Kälteflexibilität ein teilvernetztes thermoplastisches Elastomer, insbesondere in Form eines teilvernetzten TPO mit einem Schmelzindex MFI (230°C; 10 kg) von etwa 5 bis 30g/10 min einverleibt ist.

8. Folie oder Formkörper nach Anspruch 6, **dadurch gekennzeichnet, dass** das Mittel zur Optimierung der Kälteflexibilität ein kautschukartiges Polymer, insbesondere ein Poly(dien), welches auch teilhydriert sein kann, ist.

9. Folie oder Formkörper nach einem der Ansprüche 6 bis 8, **dadurch gekennzeichnet, dass** das Mittel zur Optimierung der Kälteflexibilität in einer Menge bis zu etwa 20 Gew.-%, auf 100 Gew.-% der Komponenten **a)** plus **b)** bezogen, vorliegt.

10. Folie oder Formkörper nach mindestens einem der vorhergehenden Ansprüche, **dadurch gekennzeichnet, dass** die Menge an den Komponenten **a)** und **b)** in dem Material der Folie bzw. des Formkörpers mindestens etwa 80 Gew.-%, insbesondere mindestens etwa 90 Gew.-%, beträgt.

11. Folie oder Formkörper nach mindestens einem der vorhergehenden Ansprüche, **dadurch gekennzeichnet, dass** sie/er weitere übliche Additive mit der Einschränkung enthält, dass hierdurch die geforderte Transparenz der Folie und des Formkörpers nicht beeinträchtigt wird.

12. Folie oder Formkörper nach Anspruch 11, **dadurch gekennzeichnet, dass** sie (er) als weitere übliche Additive Antiblockmittel, Gleitmittel, Lichtschutzmittel, Antioxidantien, Farbstoffe, Pigmente, Flammschutzmittel und/oder Antistatika enthält.

13. Folie oder Formkörper nach mindestens einem der vorhergehenden Ansprüche, **dadurch gekennzeichnet, dass** sie (er) halogenfrei ist.

14. Folie oder Formkörper nach mindestens einem der vorhergehenden Ansprüche, **dadurch gekennzeichnet, dass** sie (er) strahlenvernetzt ist, insbesondere mit Elektronenstrahlen oder γ-Strahlen.

15. Folie oder Formkörper nach mindestens einem der vorhergehenden Ansprüche, **dadurch gekennzeichnet, dass** sie (er) mehrlagig ausgebildet ist, insbesondere eine Zwischenschicht in Form einer Trägerschicht vorliegt.

16. Folie oder Formkörper nach Anspruch 15, **dadurch gekennzeichnet, dass** die Zwischenschicht unterbrochen, insbesondere perforiert, ist, um den Verbund des Gesamtgebildes zu verbessern.

17. Folie oder Formkörper nach Anspruch 15 oder 16, **dadurch gekennzeichnet, dass** die Zwischenschicht in Form eines Gewebes vorliegt, um die Vernähbarkeit zu ermöglichen.

18. Folie oder Formkörper nach mindestens einem der vorhergehenden Ansprüche, **dadurch gekennzeichnet, dass** deren/dessen Oberfläche zur Verbesserung der Bedruckbarkeit einer Coronabehandlung, Plasmabehandlung oder einer Beflammung unterzogen ist.

19. Folie oder Formkörper nach mindestens einem der vorhergehenden Ansprüche, **dadurch gekennzeichnet, dass** Gemische der unter die Gruppe **a) (I)** fallenden Verbindung eingesetzt sind, insbesondere in Form eines Gemisches unterschiedlicher Ethylen-Vinylacetat-Polymertypen.

20. Folie oder Formkörper nach mindestens einem der vorhergehenden Ansprüche, **dadurch gekennzeichnet, dass** darin die Komponente **a) (I)** 14 bis 45 Gew.-%, insbesondere 14 bis 28 Gew.-% Comonomer, enthält.

21. Folie oder Formkörper nach mindestens einem der vorhergehenden Ansprüche, **dadurch gekennzeichnet, dass** der Schmelzindex MFI der Komponente **a)** zwischen etwa 0, 3 und 4,0 g/10 min liegt.

22. Folie oder Formkörper nach mindestens einem der vorhergehenden Ansprüche 1 bis 20, **dadurch gekennzeichnet, dass** der Schmelzindex MFI der Komponente **b)** zwischen etwa 0, 2 und 4,0 g/10 min liegt.

23. Folie oder Formkörper nach mindestens einem der vorhergehenden Ansprüche, **dadurch gekennzeichnet, dass** bei der Einverleibung von Pigmenten deren Konzentration nicht über 3 Gew.-%, insbesondere nicht über 0,5 Gew.-% liegt.

24. Folie oder Formkörper nach mindestens einem der vorhergehenden Ansprüche, **dadurch gekennzeichnet, dass** die Komponente **b)** ein Termonomer aus der Gruppe der nicht-konjugierten Diene enthält, insbesondere in Form von 5-Ethyliden-2-norbornen und/oder 1,4-Hexadien.

## Claims

1. Sheet or moulding based on a transparent and highfrequency-weldable polymer mixture, comprising
a) (I) a copolymer of ethylene with about 8-60% by weight of comonomers selected from vinyl esters of saturated C₂-C₈ carboxylic acids, C₁-C₁₂-alkyl acrylates and C₁-C₁₂-alkyl methacrylates, optionally with carbon monoxide as termonomer or comprising a mixture of two or more of the compounds indicated above, where the polymers or their mixture have a melt index MFI (190°C; 2.16 kg) of about 0.2-15.0 g/10 min and
b) a copolymer of ethylene with about 10-30% by weight of C₃-C₁₂ α-olefin with a melt index MFI (190°C, 2.16 kg) of about 0.2-15.0 g/10 min,
where the material of the sheet or of the moulding in its entirety has been partially crosslinked.

2. Sheet or moulding according to Claim 1, **characterized in that** the partial crosslinking is expressed via a gel content of the polymer mixture of about 1-60%.

3. Sheet or moulding according to Claim 2, **characterized in that** the gel content is between about 5 and 45%, preferably between about 10 and 40%, in particular between about 10 and 30%.

4. Sheet or moulding according to at least one of the preceding claims, **characterized in that** the ratio of components a) to b) by weight is between about 99:1 and 40:60.

5. Sheet or moulding according to Claim 4, **characterized in that** the ratio of components a) to components b) by weight is between about 95:5 and 60:40.

6. Sheet or moulding according to at least one of the preceding claims, **characterized in that**, in order to optimize low-temperature flexibility, an additional polymer whose glass transition temperature is ≤ -30°C has been incorporated.

7. Sheet or moulding according to Claim 6, **characterized in that** the means incorporated in order to optimize low-temperature flexibility comprises a partially crosslinked thermoplastic elastomer, in particular in the form of a partially crosslinked TPO with a melt index MFI (230°C; 10 kg) of about 5-30 g/10 min.

8. Sheet or moulding according to Claim 6, **characterized in that** the means of optimizing the low-temperature flexibility is a rubbery polymer, in particular a poly(diene), which may also have been partially hydrogenated.

9. Sheet or moulding according to any of Claims 6 to 8, **characterized in that** the amount present of the means of optimizing the low-temperature flexibility is up to about 20% by weight, based on 100% by weight of components a) plus b).

10. Sheet or moulding according to at least one of the preceding claims, **characterized in that** the amount of components a) and b) in the material of the sheet or of the moulding is at least about 80% by weight, in particular at least about 90% by weight.

11. Sheet or moulding according to at least one of the preceding claims, **characterized in that** it comprises other conventional additives, with the proviso that there is no resultant impairment of the required transparency of the sheet and of the moulding.

12. Sheet or moulding according to Claim 11, **characterized in that** it comprises, as other conventional additives, antiblocking agents, lubricants, light stabilizers, antioxidants, dyes, pigments, flame retardants and/or antistatic agents.

13. Sheet or moulding according to at least one of the preceding claims, **characterized in that** it is halogen-free.

14. Sheet or moulding according to at least one of the preceding claims, **characterized in that** it has been radiation-crosslinked, in particular by electron beams or γ-rays.

15. Sheet or moulding according to at least one of the preceding claims, **characterized in that** it has a multilayer structure, and in particular an intermediate layer is present in the form of a backing layer.

16. Sheet or moulding according to Claim 15, **characterized in that** the intermediate layer has been interrupted, in particular perforated, in order to improve the bonding of the entire structure.

17. Sheet or moulding according to Claim 15 or 16, **characterized in that** the intermediate layer is present in the form of a textile, in order to provide sewability.

18. Sheet or moulding according to at least one of the preceding claims, **characterized in that** its surface has been subjected to a corona treatment, plasma treatment, or a flame treatment in order to improve printability.

19. Sheet or moulding according to at least one of the preceding claims, **characterized in that** mixtures of the compounds included in group a) (I) have been used, in particular in the form of a mixture of different types of ethylene-vinyl acetate polymer.

20. Sheet or moulding according to at least one of the preceding claims, **characterized in that** component a) (I) therein comprises 14-45% by weight, in particular 14-28% by weight, of comonomer.

21. Sheet or moulding according to at least one of the preceding claims, **characterized in that** the melt index MFI of component a) is between about 0.3 and 4.0 g/10 min.

22. Sheet or moulding according to at least one of the preceding Claims 1 to 20, **characterized in that** the melt index MFI of component b) is between about 0.2 and 4.0 g/10 min.

23. Sheet or moulding according to at least one of the preceding claims, **characterized in that** when pigments are incorporated their concentration is not above 3%, in particular not above 0.5% by weight.

24. Sheet or moulding according to at least one of the preceding claims, **characterized in that** component b) comprises a termonomer from the group of the non-conjugated dienes, in particular in the form of 5-ethylidene-2-norbornene and/or 1,4-hexadiene.

## Revendications

1. Feuille ou corps façonné à base d'un mélange de polymères transparent, pouvant être soudé à une fréquence élevée, contenant
a) (I) un copolymère d'éthylène comprenant environ 8 à 60% en poids de comonomères, choisis parmi les esters vinyliques d'acides carboxyliques en C₂ à C₈ saturés, les acrylates et les méthacrylates d'alkyle en C₁ à C₁₂, au choix avec du monoxyde de carbone comme termonomère, ou un mélange de deux composés désignés ci-dessus ou plus, les polymères ou leur mélange présentant un indice de fusion MFI (190°C ; 2,16 kg) d'environ 0,2 à 15,0 g/10 min et
b) un copolymère d'éthylène comprenant environ 10 à 30% en poids d'une α-oléfine en C₃ à C₁₂ présentant un indice de fusion MFI (190°C ; 2,16 kg) d'environ 0,2 à 15,0 g/10 min,
le matériau de la feuille ou du corps façonné étant partiellement réticulé dans sa totalité.

2. Feuille ou corps façonné selon la revendication 1, **caractérisé en ce que** la réticulation partielle est exprimée par une teneur en gel du mélange de polymères d'environ 1 à 60%.

3. Feuille ou corps façonné selon la revendication 2, **caractérisé en ce que** la teneur en gel est située entre environ 5 et 45%, de préférence entre environ 10 et 40%, en particulier entre environ 10 et 30%.

4. Feuille ou corps façonné selon au moins l'une quelconque des revendications précédentes, **caractérisé en ce que** le rapport pondéral des composants a) à b) est situé entre environ 99:1 et 40:60.

5. Feuille ou corps façonné selon la revendication 4, **caractérisé en ce que** le rapport pondéral des composants a) aux composants b) est situé entre environ 95:5 et 60:40.

6. Feuille ou corps façonné selon au moins l'une quelconque des revendications précédentes, **caractérisé en ce que** pour l'optimisation de la souplesse à froid, on incorpore un polymère supplémentaire présentant une température de transition vitreuse ≤ -30°C.

7. Feuille ou corps façonné selon la revendication 6, **caractérisé en ce qu'**on incorpore comme agent pour optimiser la souplesse à froid un élastomère thermoplastique partiellement réticulé, en particulier sous forme d'un TPO partiellement réticulé présentant un indice de fusion MFI (230°C; 10 kg) d'environ 5 à 30 g/10 min.

8. Feuille ou corps façonné selon la revendication 6, **caractérisé en ce que** l'agent pour optimiser la souplesse à froid est un polymère de type caoutchouc, en particulier un poly(diène), qui peut également être partiellement hydrogéné.

9. Feuille ou corps façonné selon l'une quelconque des revendications 6 à 8, **caractérisé en ce que** l'agent pour optimiser la souplesse à froid se trouve en une quantité allant jusqu'environ 20% en poids par rapport à 100% en poids des composants a) plus b).

10. Feuille ou corps façonné selon au moins l'une quelconque des revendications précédentes, **caractérisé en ce que** la quantité de composants a) et b) dans le matériau de la feuille ou du corps façonné est d'au moins environ 80% en poids, en particulier d'au moins environ 90% en poids.

11. Feuille ou corps façonné selon au moins l'une quelconque des revendications précédentes, **caractérisé en ce qu'**il contient d'autres additifs usuels, avec comme limitation que la transparence exigée de la feuille ou du corps façonné n'est pas compromise par ceux-ci.

12. Feuille ou corps façonné selon la revendication 11, **caractérisé en ce qu'**il contient comme autres additifs usuels des agents anti-adhésifs, des lubrifiants, des agents de protection contre la lumière, des antioxydants, des colorants, des pigments, des agents retardateurs de flamme et/ou des agents antistatiques.

13. Feuille ou corps façonné selon au moins l'une quelconque des revendications précédentes, **caractérisé en ce qu'**il est exempt d'halogènes.

14. Feuille ou corps façonné selon au moins l'une quelconque des revendications précédentes, **caractérisé en ce qu'**il est réticulé par des rayons, en particulier par des rayons électroniques ou γ.

15. Feuille ou corps façonné selon au moins l'une quelconque des revendications précédentes, **caractérisé en ce qu'**il est constitué par plusieurs couches, et qu'une couche intermédiaire en forme d'une couche support est en particulier présente.

16. Feuille ou corps façonné selon la revendication 15, **caractérisé en ce que** la couche intermédiaire est interrompue, en particulier perforée, pour améliorer l'assemblage de la structure totale.

17. Feuille ou corps façonné selon la revendication 15 ou 16, **caractérisé en ce que** la couche intermédiaire se trouve sous forme d'un tissu pour permettre une aptitude à la couture.

18. Feuille ou corps façonné selon au moins l'une quelconque des revendications précédentes, **caractérisé en ce que** sa surface, en vue de l'amélioration de l'aptitude à l'impression, est soumise à un traitement au corona, au plasma ou de flambage.

19. Feuille ou corps façonné selon au moins l'une quelconque des revendications précédentes, **caractérisé en ce qu'**on utilise des mélanges de composés relevant du groupe a) (I) en particulier sous forme d'un mélange de différents types de polymères d'éthylène-acétate de vinyle.

20. Feuille ou corps façonné selon au moins l'une quelconque des revendications précédentes, **caractérisé en ce que** le composant a) (I) de celui-ci contient 14 à 45% en poids, en particulier 14 à 28% en poids de comonomère.

21. Feuille ou corps façonné selon au moins l'une quelconque des revendications précédentes, **caractérisé en ce que** l'indice de fusion MFI du composant a) est situé entre environ 0,3 et 4,0 g/10 min.

22. Feuille ou corps façonné selon au moins l'une quelconque des revendications précédentes 1 à 20, **caractérisé en ce que** l'indice de fusion MFI du composant b) est situé entre environ 0,2 et 4,0 g/10 min.

23. Feuille ou corps façonné selon au moins l'une quelconque des revendications précédentes, **caractérisé en ce que** lors de l'incorporation de pigments, leur concentration n'est pas supérieure à 3% en poids, en particulier pas supérieure à 0,5% en poids.

24. Feuille ou corps façonné selon au moins l'une quelconque des revendications précédentes, **caractérisé en ce que** le composant b) contient un termonomère du groupe des diènes non conjugués, en particulier sous forme de 5-éthylidène-2-norbornène et/ou de 1,4-hexadiène.
